# EUROPÄISCHE PATENTSCHRIFT

(11) **EP 1 005 787 B1**
(45) Veröffentlichungstag und Bekanntmachung des Hinweises auf die Patenterteilung: **13.06.2001**
(21) Anmeldenummer: 98123133.5
(22) Anmeldetag: 04.12.1998
(51) Int. Cl.: A01K 3/00

(54) **Amphibienzaun als Leiteinrichtung für Kröten, Frösche und dergleichen Amphibien**
Amphibia fence for guiding tadpoles, frogs and similar amphibia
Barrière pour amphibie pour le guidage de crapauds, de grenouilles ou d'amphibies similaires

(43) Veröffentlichungstag der Anmeldung: 07.06.2000
(73) Patentinhaber: Kling, Frank, 89584 Ehingen (DE)
(72) Erfinder: Rolf Kling, 89584 Ehingen (DE)
(74) Vertreter: Kiessling, Christian

(56) Entgegenhaltungen:
- DE-A- 19 621 041

## Beschreibung

Die Erfindung betrifft einen Amphibienzaun als Leiteinrichtung für Kröten, Frösche und dergleichen, der aus in das Erdreich zu rammenden Pfosten (16) und zwischen diesen Pfosten angebrachten Planken gebildet ist.

Amphibien wie Kröten, Frösche und dergleichen Kriechtiere müssen sich oft quer über Verkehrswege hinwegbewegen und werden daher, zumal im Sommer, zu großen Mengen auf Asphalt- und Betonstraßen überfahren und gehen zum Teil auf der Straßenoberfläche in Verwesung über.

Dies bedingt Irritationen auf der Seite von Kraftfahzeugfahrern und Leben im Bereich von Biotopen wird in entsprechendem Umfang vernichtet. Aus diesem Grunde ist man in den letzten Jahren bestrebt, bestimmte, gegen den Straßenverkehr abgeschirmte und nach außen geschätzte "Amphibien-Wege" einzurichten. Es ist auch bekannt, solche geschützten "Kröten-Wege" an oder im Bereich von Zäunen vorzusehen, die durchweg aus Metall, zum Teil aus nichtrostendem Stahl oder auch Leichtmetall bestehen und nur teilweise über dem Boden, vornehmlich gar in Bodenvertiefungen wie Gräben oder in Gewässern angelegt werden. Das dabei verwendete Material muß zudem, wenn eine höhere Lebensdauer angestrebt wird, gegen Korrosion geschätzt werden.

Aus DE-A-19621041 ist ein Amphibienzaun der eingangs genannten Art bekannt, der der Topographie eine Geländes zu folgen in der Lage ist. Dieser Amphibienzaun weist Verankerungspfäle auf, die zwei Schenkel umfassen, zwischen denen Wandteile einschiebbar sind, wobei die Wandteile in ihren Enden überlappend zusammengehalten sind.

Der Erfindung liegt die Aufgabe zugrunde, einen Amphibienzaun für Kröten, Frösche und dergleichen so zu gestalten, daß er bezüglich einer Straße ein sicheres Hindernis für Kröten, Frösche und dergleichen darstellt, dabei einen Straßenverkehr im Bereich des Krötenzaunes nicht behindert und auch in feuchter Umgebung langzeitig korrosionsbeständig ist und leicht von Hand sowie dauerhaft stabil installierbar ist.

Für einen Ampfibienzaun der eingangs genannten Art wird diese Aufgabe erfindungsgemäß dadurch gelöst, daß die Planken zusammengeschraubt und mit Oberflanschen und Unterflanschen ausgestattet sind, die mit Abdeckungen versehen sind, daß die etwa waagerecht verlaufenden Unterflansche an der Unterseite des Amphibienzaunes eine Amphibien-Laufstraße von verzinkten Stahlblech ausbilden, daß die Pfosten H-profilartig bzw. doppel-U-profilartig ausgebildet sind daß und die Unterflansche sowie die Oberflansche der Planken an den Stirnseiten der Planken jeweils schlitzartige Aussparungen aufweisen, die mit den vorderen Flanschen der H-profilartig bzw. doppel-U-profilartig ausgebildeten Pfosten zusammenwirken.

Bevorzugte Ausgestaltungen der Erfindung sind Gegenstand der Unteransprüche.

Bei dem erfindungsgemäßen Amphibienzaun wird durch die Merkmalskombination, daß die Planken zusammengeschraubt und mit Oberflanschen und Unterflanschen ausgestatet sind, die mit Abdeckungen versehen sind, die etwa waagerecht verlaufenden Unterflansche an der Unterseite des Amphibienzaunes eine Amphibien-Laufstraße von verzinkten Stahlblech ausgebilden, und die Pfosten H-profilartig bzw. doppel-U-profilartig ausgebildet sind und die Unterflansche sowie die Oberflansche der Planken an den Stirnseiten der Planken jeweils schlitzartige Aussparungen aufweisen, die mit den vorderen Flanschen der H-profilartig bzw. doppel-U-profilartig ausgebildeten Pfosten zusammenwirken, erreicht, daß die Planken leicht und schnell von Hand und gleichwohl effektiv und stabil mit einem Pfosten dauerhaft verbindbar sind und dabei insbesondere den gegebenen Bodenverhältnissen wie Unebenheiten und einem abfallenden oder ansteigenden Gelände leicht und schnell anpassbar sind.

Insbesondere zu dem Zweck, um den erfindungsgemäßen Amphibienzaun gegebenen Bodenverhältnissen wie Unebenheiten und einem abfallenden oder ansteigenden Gelände leicht und schnell anzupassen können die Stirnflächen der Planken vorgesehen sein, um nach Anbringen an einem Pfosten einen Amphibienzaunteil zu bilden, der zu einem benachbarten Amphibienzaunteil in einen Winkel angeordnet ist, um einem unebenen Terrain zu folgen.

Die beiden schlitzartigen Aussparungen eines Unterflansches und eines Oberflansches einer Plankenstirnseite weisen dabei vorzugsweise jeweils gleiche Längen auf, um in jeweils gleicher Weise stabilitätsbildend zu sein. Eine Länge von 3 cm bis 6 cm, insbesondere 5 cm hat sich dabei als ausreichend zum Herbeiführen einer notwendigen Stabilität erwiesen.

Die schlitzartigen Aussparungen sind bei dem erfindungsgemäßen Amphibienzaun vorzugsweise so breit bemessen sind, daß die vorderen Flanschen der H-profilartig bzw. doppel-U-profilartig ausgebildeten Pfosten schlüssig in sie einführbar sind. Hierdurch wird die Gesamtstabilität des erfindungsgemäßen Amphibienzaunes weiter gesteigert.

Gemäß einer bevorzugten Ausführungsform der Erfindung wird der tragende Teil des Krötenzaunes durch lotrechte Pfosten, waagerechte Planken und zwischen diesen vorgesehenen Verbindungen gebildet. Die verzinkten Stahlbleche weisen vorzugsweise eine Dicke von ca. 2,5 bis 3,0 mm auf.

So weisen die Planken einen breiten Unterflansch und einen schmalen Oberflansch auf, wobei der Unterflansch die Laufstraße bildet und mit einem Stoßblech am Pfosten vorzugsweise lösbar verbunden ist, um ein tragbares Gerüst zu schaffen, das nach Bedarf, vorzugsweise im Frühjahr, auseinandergenommen, gereinigt und getrocknet und etwa bis zum Herbst gestapelt und aufbewahrt wird. Wegen des Feuchtigkeitsgehaltes der Umgebungsluft sollte die Überzugs-Zinkschicht eine Dicke von 60 bis 80 my haben.

Die ganze Oberfläche der Zaunelemente ist zweckmäßigerweise mit einer Schutzschicht überzogen.

Die Planken haben gemäße einer besonderen Ausführungsform L-förmigen Querschnitt Unter- und Oberflansch, wobei der schmale Oberflansch nach innen zur Längswand hin zurückgekrümmt ist, während die Ränder der breiten Unterflansche um etwa 30 bis 40 Grad aus der Flanschebene heraus nach unten abgewinkelt sind.

Auf diese Weise wird ein Abfließen und Abtropfen der Flüssigkeit oder des Wassers am Rande der Zaunflansche ermöglicht, dies insbesondere dann, wenn die Ränder der breiten Unterflansche um etwa 30 bis 40 Grad aus der Flanschebene heraus nach unten abgewinkelt sind. Das eröffnet auch die Möglichkeit, daß z.B. Kröten sich an der Unterseite der Flansche mit ihren saugnapfartigen Haftelementen entlangbewegen können, ohne Querbewegungen anderer Kleintiere zu behindern. Nur die Querbewegungen solcher Kleintiere über die zum Teil scharfen Randkanten hinweg werden durch eine entsprechende Neigung dieser Randkanten schräg nach unten verhindert, da die Haft- und Haltewirkung der Saugnäpfe an den "Pfoten" mit dem Neigungswinkel abnimmt. Bei der Konstruktion muß also vor allem dieser "Haftwinkel" beachtet werden.

Auch können Planken und Flansche auf diese Weise leicht und schnell abtrocknen, wenn sie in einer Luftströmung längs Planken und waagrecht angeordneten Gerüststäben untergebracht sind. Vorzugsweise werden Pfosten und Planken wechselseitig verschraubt, wobei die Verschraubungen möglichst so gestaltet und angeordnet sein sollen, daß geeignete handliche Untergruppen entstehen, die sich zur Lagerung und zum Transport kompakt zusammenfassen lassen.

Hierbei kann es wieder von Vorteil sein, daß die äußeren Enden der Stabprofile von als Flachschalen ausgebildeten Haubenteilen überspannt sind, welche über der Laufstraße etwa waagrecht abgekantet sind.

Die Abkantung ist vorzugsweise auch nach unten abgerundet sein, damit größere Tiere wie Hasen, Rehe und dergleichen beim Überspringen keine Verletzungen ihrer Läufe erleiden. Es können auch Zaunelemente und Pfosten wahlweise mit unterschiedlichen RAL-Farben beschichtet sein. Auf diese Weise können Lichtstrahlen-Signale ausgelöst werden, deren Sinn auch Amphibien deuten können.

Der erfindungsgemäße Amphibienzaun wird im folgenden anhand einer bevorzugten Ausführungsform erläutert, die in den Figuren der Zeichnung dargestellt ist. Darin zeigen:
- Fig. 1: eine räumliche Darstellung eines Ausschnittes des Amphibienzaunes in auseinandergezogenem Zustand (Explosionsdarstellung);
- Fig.2: dieselben Teile in zusammengefügtem Zustand;
- Fig. 3: einen Querschnitt durch eine L-förmige Planke;
- Fig.4: ein Querschnitt des Amphibienzaunes an einem Erdwall oder Graben und
- Fig.5: die Draufsicht eines Ausschnittes einer Stoß-Verbindung von einem Pfosten aus zwei zusammengeschweißten U-Profilen und zwei Planken

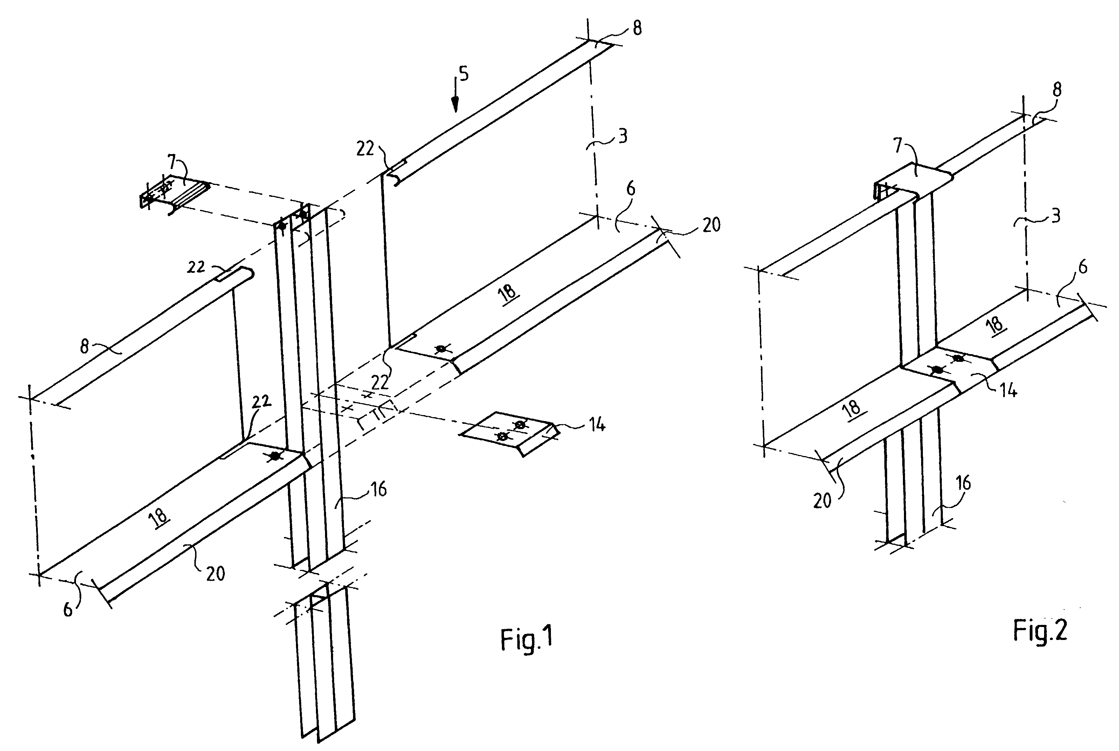

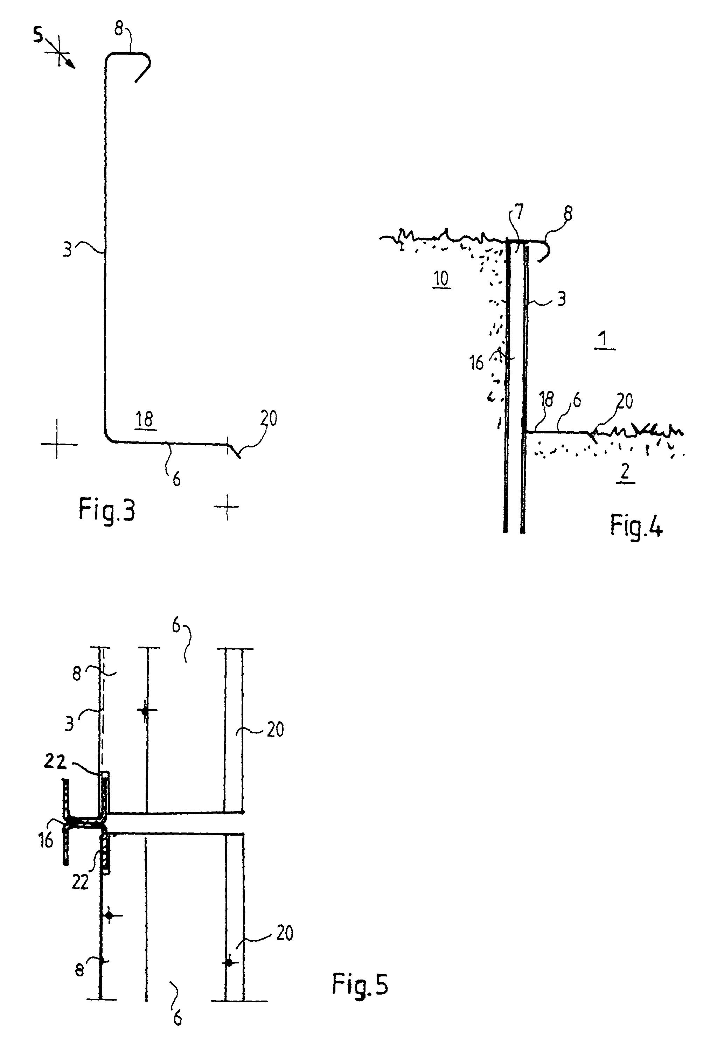

Figur 1 zeigt einen weiter in Figur 2 dargestellten erfindungsgemäße Amphibienzaun in einer Explosionsansicht, wobei erkennenbar ist, wie die Verbindung von Pfosten 16 und Planken 5 vornehmlich durch in die Schlitze an den Seiten der Planken eingreifende U-Profile bewerkstelligt wird. Sie könnte alternativ auch durch Schrauben oder Nieten erfolgen. Wie der Figur 1 entnehmbar ist, ist der dargestellte Amphibienzaun im wesentlichen aus in das Erdreich zu rammenden Pfosten (16) und zwischen diesen Pfosten zusammengeschraubten Planken (5) gebildet, wobei an seiner Unterseite eine Amphibien-Laufstraße aus etwa waagerecht verlaufenden Unterflanschen (6) von verzinkten Stahlblech ausgebildet ist, die mit Abdeckungen (7,14) versehen sind. Wesentlich ist bei diesem Amphibienzaun, daß die Pfosten H-profilartig bzw. doppel-U-profilartig ausgebildet sind und die Unterflansche (6) sowie die Oberflansche (8) der Planken (5) an den Stirnseiten der Planken jeweils schlitzartige Aussparungen (22) aufweisen, die mit den vorderen Flanschen der H-profilartig bzw. doppel-U-profilartig ausgebildeten Pfosten (16) zusammenwirken. Die schlitzartigen Aussparungen (22) sind insbesondere auch in der Figur 5 erkennbar.

Der in Figur 2 dargestellte Amphibienzaun weist einen als Laufstraße 18 dienende durchgängigen Unterflansch 6 auf, der eine Breite von 15 cm bis 20 cm aufweist, aber den speziellen Bedürfnissen der dort verkehrenden Tiere angepassbar ist.

Figur 3 zeigt eine erfindungsgemäße Planke 5, die aus einem etwa 2,5 mm dicken Stahlblechelement gebildet ist. Sie ist L-förmig und besteht aus einer Längswand 3, einem Unterflansch 6 mit Unterflanschrand 20 und einem Oberflansch 8, dessen Rand schräg nach innen gebogen ist.

Wie der Querschnitt in Fig.4 darstellt, ist in einer Rasenlandschaft ein Graben 1 im rechten Winkel ausgehoben, dessen Boden 2 und Wall 3 durch L-förmige Planken 5 ausgekleidet sind, deren Unterflansche 6 etwa dreimal breiter als die Oberflansche 8 ausgebildet sind. Die Ränder beider Flansche 6,8 sind jeweils etwa 30 mm breit und bei den Unterflanschen etwa um 40 Grad nach schräg unten in den Boden versenkt. An den Kanten von um ca. 40 Grad geneigten Randteilen der Flansche können sich Amphibien ohne Verletzungsgefahr längs und quer hinwegbewegen, und größere Tiere können sie übergreifen.

Die Bemessung bzw. die Länge der aus zwei zusammengeschweißten U-Stahlprofilen bestehenden Pfosten 16 wird dabei maßgeblich durch die Art des vorhandenen Bodens, ob Wiese oder fester Grund, bestimmt. Sie können im Abstand von 2 bis 4 m ins Erdreich gerammt sein.

Die Draufsicht der Stoßdarstellung in Fig.5 läßt erkennen, daß dort zwei U-förmige Profile oder auch Längsstäbe mit ihren Stegen 10 zu einem Pfosten 16 aneinandergeschweißt sind. Sie bilden also mit den Planken 5 eine zusammengesetzte montierbare und demontierbare Längswand, die durch die Anordnung von Pfosten 16 und Planken 5 ausgesteift ist. An den Planken 5 sind für die Montage Schlitze 22 vorgesehen, so daß sie über die U-Profile der ins Erdreich gerammten Pfosten 16 geschoben werden können.

Die Verbindungsfläche wird dann durch eine aufgeschraubte Blechhaube 7 abgedeckt, so daß der ganze Amphibienzaun nochmal stabilisiert und gegen Vandalismus und Diebstahl gesichert ist. Das Stoßblech 14 wird zwischen zwei verbundene Planken als Abdeckung der unteren Flanschseiten geschraubt. Es dient als Verbindungsstück sowohl zur Stabilisierung des Zaunes als auch zur Sicherheit für kleinere Tiere, die sich nun an den scharfen Kanten der Seitenteile nicht verletzen können.

Als zweckmäßig wird es auch angesehen, die Deckbleche über der Laufstraße etwa waagerecht abzukanten. Diese Abkantung sollte nach unten abgerundet sein, damit größere Tiere wie Hasen, Rehe usw. beim Überspringen keine Verletzungen ihrer Läufe erleiden.

Die Elemente des Amphibienzaunes sind mit einer widerstandsfähigen Zinkschicht oder einer anderen vergleichbaren Oberflächenschutzschicht überzogen und damit den Umständen entsprechend gegen Feuchtigkeit isoliert. Es kann auch ein anderes vergleichbares Schutzmittel eingesetzt werden. Zweckmäßigerweise wird die ganze Oberfläche der Bauelemente des Amphibienzaunes feuerverzinkt. Zudem sind die einzelnen Unterbaugruppen konstruktiv so aufgeteilt, daß der Zaun leicht zerlegt und wieder zusammengefügt werden kann.

Die Zaunelemente und Pfosten sind mit unterschiedlichen RAL-Farben beschichtet.

Auf die geschilderte Weise ist ein mechanisch und korrosionsmäßig gegen äußere Angriffe gesicherter Amphibienzaun geschaffen, der zudem den Witterungsbedingungen entsprechend schnell und bequem zusammengefügt und wieder abgebaut werden kann.

Durch seine Abkantungen wird die Zaun-Konstruktion erheblich verstärkt und ausgesteift.

## Patentansprüche

1. Amphibienzaun als Leiteinrichtung für Kröten, Frösche und dergleichen, der aus in das Erdreich zu rammenden Pfosten (16) und zwischen diesen Pfosten angebrachten Planken (5) gebildet ist, dadurch **gekennzeichnet,** daß die Planken zusammengeschraubt und mit Oberflanschen (9) und Unterflanschen ausgestattet sind, die mit Abdeckungen (7, 14) versehen sind, daß die etwa waagerecht verlaufenden Unterflansche an der Unterseite des Amphibienzaunes eine Amphibien-Laufstraße von verzinktem Stahlblech ausbilden, daß die Pfosten H-profilartig bzw. doppel-U-profilartig ausgebildet sind und daß die Unterflansche (6) sowie die Oberflansche (8) der Planken (5) an den Stirnseiten der Planken jeweils schlitzartige Aussparungen (22) aufweisen, die mit den vorderen Flanschen der H-profilartig bzw. doppel-U-profilartig ausgebildeten Pfosten (16) zusammenwirken.

2. Amphibienzaun nach Anspruch 1, dadurch gekennzeichnet, daß die Stirnflächen der Planken schräg vorgesehen sind, um nach Anbringen an einem Pfosten einen Amphibienzaunteil zu bilden, der zu einem benachbarten Amphibienzaunteil in einen Winkel angeordnet ist, um einem unebenen Terrain zu folgen.

3. Amphibienzaun nach Anspruch 2, dadurch gekennzeichnet, daß die beiden schlitzartigen Aussparungen (22) eines Unterflansches und eines Oberflansches einer Plankenstirnseite jeweils gleiche Längen aufweisen.

4. Amphibienzäun nach einem der Ansprüche 2 oder 3, dadurch gekennzeichnet, daß die schlitzartigen Aussparungen (22) jeweils eine Länge von 3 cm bis 6 cm, insbesondere 5 cm aufweisen.

5. Amphibienzaun nach einem der Ansprüche 2 bis 4, dadurch gekennzeichnet, daß die schlitzartigen Aussparungen (22) so breit bemessen sind, daß die vorderen Flanschen der H-profilartig bzw. doppel-U-profilartig ausgebildeten Pfosten (16) schlüssig in sie einführbar sind.

6. Amphibienzaun nach einem der vorhergehenden Ansprüche, dadurch gekennzeichnet, daß das verzinkten Stahlblech eine Dicke von ca. 2,5 bis 3,0 mm aufweist.

7. Amphibienzaun nach einem der vorhergehenden Ansprüche, dadurch gekennzeichnet, daß der aus lotrechten Pfosten (16), waagerechten Planken (5) und zwischen diesen vorgesehenen Abdeckungen (7,14) gebildet ist.

8. Amphibienzaun nach einem der vorhergehenden Ansprüche, dadurch gekennzeichnet, daß die Planken (5) einen breiten Unterflansch (6) und einen schmalen oberflansch (8) aufweisen.

9. Amphibienzaun nach einem der vorhergehenden Ansprüche, dadurch gekennzeichnet, daß die Planken (5) ebenso wie die Pfosten (16) und Abdeckungen (7,14) mit einer korrosionsbeständigen Zinkschicht überzogen sind.

10. Amphibienzaun nach einem der vorhergehenden Ansprüche, dadurch gekennzeichnet, daß die Überzugs-Zinkschicht eine Dicke von 60 bis 80 mm hat.

11. Amphibienzaun nach einem der vorhergehenden Ansprüche, dadurch gekennzeichnet, daß die ganze Oberfläche der Zaunelemente mit einer Schutzschicht überzogen ist.

12. Amphibienzaun nach einem der vorhergehenden Ansprüche, dadurch gekennzeichnet, daß die ganze Oberfläche der Bauelemente des Amphibienzaunes feuerverzinkt ist.

13. Amphibienzaun nach einem der vorhergehenden Ansprüche, dadurch gekennzeichnet, daß die Planken L-förmigen Querschnitt mit breitem Unterflansch (6) und schmalem oberflansch (8) haben, wobei der schmale Oberflansch zur Längswand (3) zurückgekrümmt ist, während der Rand des Unterflansches (6) um etwa 30 bis 40 Grad aus der Flanschebene heraus als Unterflanschrand (20) nach unten abgewinkelt ist.

14. Amphibienzaun nach einem der vorhergehenden Ansprüche, dadurch gekennzeichnet, daß die Oberflansche (8) der Planken (5) wenigstens einen haubenartig nach unten gebogenen Eckflansch aufweisen, der um 30 bis 45 Grad nach innen zur Längswand (3) hin abgebogen ist.

15. Amphibienzaun nach einem der vorhergehenden Ansprüche, dadurch gekennzeichnet, daß der Unterflansch (6) wenigstens die doppelte Breite der Plankenhöhe (5) aufweist.

16. Amphibienzaun nach einem der vorhergehenden Ansprüche, dadurch gekennzeichnet, daß die Pfosten (16) durch zwei in lotrechten Ebenen aneinanderstoßende U-Profilstäbe gebildet sind, die in einer Stoßverbindung zusammengefaßt bzw. geschweißt sind.

17. Amphibienzaun nach einem der vorhergehenden Ansprüche, dadurch gekennzeichnet, daß Pfosten (16) und Planken (5) wechselseitig zusammengeschraubt sind.

18. Amphibienzaun nach einem der vorhergehenden Ansprüche, dadurch gekennzeichnet, daß die Pfosten (16) im Abstand von 2 bis 4 m ins Erdreich gerammt werden können.

19. Amphibienzaun nach einem der vorhergehenden Ansprüche, dadurch gekennzeichnet, daß die Laufstraße eine Breite von 15 bis 20 cm hat.

20. Amphibienzaun nach einem der vorhergehenden Ansprüche, dadurch gekennzeichnet, daß die oberen Enden der Stabprofile durch Deckbleche überspannt sind.

21. Amphibienzaun nach einem der vorhergehenden Ansprüche, dadurch gekennzeichnet, daß die Stoßbleche über der Laufstraße etwa waagerecht abgekantet sind.

22. Amphibienzaun nach Anspruch 21, dadurch gekennzeichnet, daß die Abkantung nach unten gerundet ist, damit größere Tiere wie Hasen, Rehe usw beim Überspringen keine Verletzungen ihrer Läufe erleiden.

23. Amphibienzaun nach einem der vorhergehenden Ansprüche, dadurch gekennzeichnet, daß Zaunelemente und Pfosten (16) wahlweise mit unterschiedlichen RAL-Farben beschichtet werden können.

24. Amphibienzaun nach einem der vorhergehenden Ansprüche, dadurch gekennzeichnet, daß die äußeren Ränder der Oberflansche jeweils um den Rand des nächsten Oberflansches herumgebogen sind.

## Claims

1. An amphibian fence as a guiding device for toads, frogs and the like which is formed of posts (16) to be rammed into the earth and planks (5) mounted between said posts, characterized in that the planks are screwed together and equipped with upper flanges (9) and bottom flanges which are provided with covers (7, 14), the substantially horizontally extending bottom flanges form an amphibian runway of galvanized steel sheet on the underside of the amphibian fence, and the posts are formed as an H section or double U section and the bottom flanges (6) and the upper flanges (8) of the planks (5) each have slot-like gaps (22) on the faces of the planks which cooperate with the front flanges of the posts (16) formed as an H section or double U section.

2. An amphibian fence according to claim 1, characterized in that the end faces of the planks are provided obliquely in order to form, when mounted on a post, an amphibian fence part which is disposed at an angle to an adjacent amphibian fence part in order to follow uneven terrain.

3. An amphibian fence according to claim 2, characterized in that the two slot-like gaps (22) of a bottom flange and of an upper flange of a plank face have equal lengths.

4. An amphibian fence according to either of claims 2 and 3, characterized in that the slot-like gaps (22) each have a length of from 3 cm to 6 cm, in particular 5 cm.

5. An amphibian fence according to any of claims 2 to 4, characterized in that the slot-like gaps (22) are dimensioned so wide that the front flanges of the posts (16) formed as an H section or double U section are introducible thereinto in locking fashion.

6. An amphibian fence according to any of the above claims, characterized in that the galvanized steel sheet has a thickness of from about 2.5 to 3.0 mm.

7. An amphibian fence according to any of the above claims, characterized in that it is formed of vertical posts (16), horizontal planks (5) and covers (7, 14) provided therebetween.

8. An amphibian fence according to any of the above claims, characterized in that the planks (5) have a wide bottom flange (6) and a narrow upper flange (8).

9. An amphibian fence according to any of the above claims, characterized in that the planks (5) as well as the posts (16) and covers (7, 14) are coated with a corrosion-resistant zinc layer.

10. An amphibian fence according to any of the above claims, characterized in that the zinc coating layer has a thickness of from 60 to 80 mm.

11. An amphibian fence according to any of the above claims, characterized in that the whole surface of the fence elements is coated with a protective layer.

12. An amphibian fence according to any of the above claims, characterized in that the whole surface of the elements of the amphibian fence is hot-dip galvanized.

13. An amphibian fence according to any of the above claims, characterized in that the planks have an L-shaped cross section with a wide bottom flange (6) and narrow upper flange (8), the narrow upper flange being curved back toward the longitudinal wall (3) while the skirt of the bottom flange (6) is bent downward out of the flange plane by about 30 to 40 degrees as a bottom flange skirt (20).

14. An amphibian fence according to any of the above claims, characterized in that the upper flanges (8) of the planks (5) have at least one corner flange bent downward like a hood which is bent inwardly by 30 to 45 degrees toward the longitudinal wall (3).

15. An amphibian fence according to any of the above claims, characterized in that the bottom flange (6) has at least twice the width of the plank height (5).

16. An amphibian fence according to any of the above claims, characterized in that the posts (16) are formed by two U section bars abutting in vertical planes which are combined or welded in a butt joint.

17. An amphibian fence according to any of the above claims, characterized in that posts (16) and planks (5) are mutually screwed together.

18. An amphibian fence according to any of the above claims, characterized in that the posts (16) can be rammed into the earth at a distance of from 2 to 4 meters.

19. An amphibian fence according to any of the above claims, characterized in that the runway has a width of 15 to 20 cm.

20. An amphibian fence according to any of the above claims, characterized in that the upper ends of the rod sections are spanned by cover plates.

21. An amphibian fence according to any of the above claims, characterized in that the splice plates are folded substantially horizontally over the runway.

22. An amphibian fence according to claim 21, characterized in that the fold is rounded downward so that larger animals such as hares, deer, etc., do not hurt their legs when jumping over.

23. An amphibian fence according to any of the above claims, characterized in that fence elements and posts (16) can alternatively be coated with different RAL colors.

24. An amphibian fence according to any of the above claims, characterized in that the outer skirts of the upper flanges are each bent around the skirt of the next upper flange.

## Revendications

1. Barrière pour amphibie pour le guidage de crapauds, de grenouilles ou d'amphibies similaires, constituée par des pieux (16) destinés à être battus en terre et par des planches (5) disposées entre lesdits pieux, **caractérisée en ce que** les planches sont assemblées par vissage et sont équipées d'ailes supérieures (8) et d'ailes inférieures (6) munies de revêtements (7, 14), que les ailes inférieures s'étendant à peu près horizontalement forment, au bas de la barrière pour amphibie, un parcours pour amphibie réalisé en tôle d'acier galvanisé, que les pieux sont formés en profilés en H ou en double U et que les ailes inférieures (6) et les ailes supérieure's (8) des planches (5) présentent, sur les faces des extrémités des planches, des évidements en forme de fente (22) coopérant avec les ailes avant des pieux (16) formés en profilés en H ou en double U.

2. Barrière pour amphibie selon la revendication 1, caractérisée en ce que les faces des extrémités des planches sont réalisées en chanfrein pour constituer, après être attachées sur un pieu, un élément de barrière qui est disposé dans un angle par rapport à l'élément de barrière voisin pour suivre le sol accidenté.

3. Barrière pour amphibie selon la revendication 2, caractérisée en ce que les deux évidements en forme de fente (22) dans une aile inférieure et une aile supérieure d'une face d'extrémité de planche présentent des longueurs identiques.

4. Barrière pour amphibie selon l'une des revendications 2 ou 3, caractérisée en ce que les deux évidements en forme de fente (22) présentent chacune une longueur de 3 cm à 6 cm, en particulier de 5 cm.

5. Barrière pour amphibie selon l'une des revendications 2 à 4, caractérisée en ce que les deux évidements en forme de fente (22) présentent une largeur telle que les ailes avant des pieux (16) formés en profilés en H ou en double U peuvent être introduites de manière à engagement positif.

6. Barrière pour amphibie selon l'une des revendications précédentes, caractérisée en ce que la tôle d'acier galvanisée présente une épaisseur de 2,5 à 3,0 mm environ.

7. Barrière pour amphibie selon l'une des revendications précédentes, caractérisée en ce que sa structure portante est constitée par des pieux verticaux (16), des planches horizontales (5) et des chapes (7, 14) prévus entre eux.

8. Barrière pour amphibie selon l'une des revendications précédentes, caractérisée en ce que les planches (5) présentent une aile inférieure (6) large et une aile supérieure (8) étroite.

9. Barrière pour amphibie selon l'une des revendications précédentes, caractérisée en ce que les planches (5) ainsi que les pieux (16) et les chapes (7, 14) sont recouverts d'un revêtement en zinc résistant à la corrosion.

10. Barrière pour amphibie selon l'une des revendications précédentes, caractérisée en ce que le revêtement en zinc a une épaisseur de 60 à 80 µm.

11. Barrière pour amphibie selon l'une des revendications précédentes, caractérisée en ce que toutes les surfaces des éléments de barrière sont munies d'un revêtement de protection.

12. Barrière pour amphibie selon l'une des revendications précédentes, caractérisée en ce que toutes les surfaces des éléments constructifs de la barrière pour amphibie sont galvanisées à chaud.

13. Barrière pour amphibie selon l'une des revendications précédentes, caractérisée en ce que les planches présentent une section en forme d'un L ayant une aile inférieure (6) large et une aile supérieure (8) étroite, l'aile supérieure étroite étant recourbée vers la paroi longitudinale (3) et le bord de l'aile inférieure (6) étant repliés d'un angle de 30 à 40 degrés par rapport au plan des ailes, vers le bas, constituant un rebord d'aile inférieure (20).

14. Barrière pour amphibie selon l'une des revendications précédentes, caractérisée en ce que les ailes supérieures (8) des planches (5) présentent au moins une bride en équerre repliée vers le bas comme une chape, repliée de 30 à 40 degrés à l'intérieur vers la paroi longitudinale (3).

15. Barrière pour amphibie selon l'une des revendications précédentes, caractérisée en ce que l'aile inférieure (6) présente une largeur du double au moins de l'hauteur de la planche (5).

16. Barrière pour amphibie selon l'une des revendications précédentes, caractérisée en ce que les pieux (16) sont formés par deux barres profilées en U jointives dans des plans verticaux unies ou soudés dans un joint bout à bout.

17. Barrière pour amphibie selon l'une des revendications précédentes, caractérisée en ce que les pieux (16) et les planches (5) sont attachés, l'un à l'autre, par vissage.

18. Barrière pour amphibie selon l'une des revendications précédentes, caractérisée en ce que les pieux (16) peuvent être battus en terre à une distance de 2 à 4 m, l'un à l'autre.

19. Barrière pour amphibie selon l'une des revendications précédentes, caractérisée en ce que le parcours a une largeur de 15 à 20 cm.

20. Barrière pour amphibie selon l'une des revendications précédentes, caractérisée en ce que les extrémités supérieures des profilés des barres sont recouvertes d'éléments de chape.

21. Barrière pour amphibie selon l'une des revendications précédentes, caractérisée en ce que les plaques de joint sont repliés à peu près horizontalement au-dessus du parcours.

22. Barrière pour amphibie selon la revendication 21, caractérisée en ce que ce pliage est arrondi en bas pour assurer que des animaux plus grands comme des lapins et des chevreuils ne subissent pas de blessures aux jambes en le traversant.

23. Barrière pour amphibie selon l'une des revendications précédentes, caractérisée en ce que les éléments de barrière et les pieux (16) peuvent au choix être revêtus de diverses peintures RAL.

24. Barrière pour amphibie selon l'une des revendications précédentes, caractérisée en ce que les bords extérieurs des ailes supérieures sont chacun recourbés autour le bord de l'aile supérieure voisine.
